Europäisches Patentamt

European Patent Office

Office européen des brevets

(19)

(11) **EP 1 267 333 A1**

(12) **EUROPEAN PATENT APPLICATION**

(43) Date of publication:
**18.12.2002 Bulletin 2002/51**

(51) Int Cl.[7]: **G11B 5/85**, G11B 5/84

(21) Application number: **02253976.1**

(22) Date of filing: **07.06.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **11.06.2001 JP 2001176008**

(71) Applicant: **TDK Corporation**
**Chuo-ku, Tokyo 103-8272 (JP)**

(72) Inventors:
• **Takai, Mitsuru, c/o TDK Corp.**
**Tokyo 103-8272 (JP)**

• **Kanazawa, Hiromichi, c/o TDK Corp.**
**Tokyo 103-8272 (JP)**
• **Yamanaka, Shunichi, c/o TDK Corp.**
**Tokyo 103-8272 (JP)**

(74) Representative: **Rackham, Stephen Neil**
**GILL JENNINGS & EVERY,**
**Broadgate House,**
**7 Eldon Street**
**London EC2M 7LH (GB)**

(54) **Producing magnetic recording medium**

(57)    A method of producing a magnetic recording medium, and an apparatus thereof in which coercive force can be detected in an in-line mode enables a metal thin film magnetic layer to be produced stably, and a vapor deposition film having a stable quality to be obtained. A method of producing a magnetic recording medium, comprises the steps of forming a metal thin film magnetic layer on a substrate, irradiating light onto a surface of the metal thin film magnetic layer, and measuring the "lightness" of light reflected from the surface to monitor coercive force of the metal thin film magnetic layer.

Fig.1

EP 1 267 333 A1

**Description**

The present invention relates to a method of producing a magnetic recording medium, and an apparatus thereof. More particularly, the present relates to a method of producing a magnetic recording medium, and an apparatus thereof in which a metal thin film magnetic layer can be produced stably, and a vapor deposition film having a stable quality can be obtained.

Vapor deposition technique is conducted in a vacuum container by vaporizing a vapor deposition material in a crucible with electron beams irradiated from an electron gun to vapor deposit the vapor deposition material on an object.

For example, such vapor deposition technique is used to form a ferromagnetic metal thin film of a magnetic recording medium. Specifically, a magnetic tape is formed by an oblique vapor deposition method. The magnetic tape includes the ferromagnetic metal thin film containing cobalt (Co), or containing Co as a main component, and nickel (Ni), chromium (Cr), or the like as a magnetic layer. It is known that thus-formed magnetic tape including the ferromagnetic metal thin film as the magnetic layer has a great saturation magnetic flux density and coercive force, and shows excellent electromagnetic conversion properties.

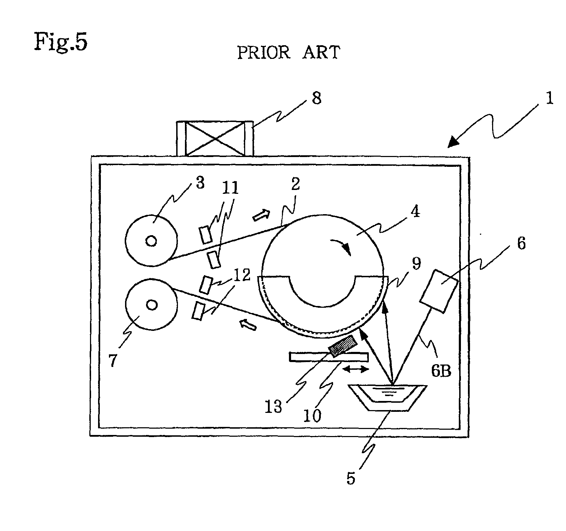

In the oblique vapor deposition method, a vapor of the ferromagnetic metal is introduced at a specified angle to the surface of the non-magnetic substrate to form the ferromagnetic metal thin film comprising columnar crystal particles inclined to the substrate. In the conventional oblique vapor deposition, an oblique vapor deposition apparatus 1 is, for example, used schematically shown in Fig. 5. In the oblique vapor deposition apparatus 1, a non-magnetic substrate 2 in a long film shape is fed from a feed roll 3 in a vacuum chamber, and is transported along a surface of a cooling rotating drum 4. A vapor deposition material comprising ferromagnetic metal contained in a fixed crucible 5 is irradiated with an electron beam 6B from an electron gun 6 to dissolve the vapor deposition material. The vapor of the vapor deposition material is produced to subject the oblique vapor deposition to a surface of the non-magnetic substrate 2 to form a ferromagnetic metal thin film thereon. The non-magnetic substrate 2 on which the ferromagnetic metal thin film is formed is taken up using a take-up roll 7. A shield 9 is formed to control an angle of introducing the ferromagnetic metal to be vapor deposited. The shield 9 has an opening so that the vaporized metal is vapor-deposited only at a predetermined portion of the non-magnetic substrate 2. The opening has a shutter 10 which slides at initial and end stages of the vapor deposition in directions indicated by arrows, and functions to prevent unnecessary vapor deposition. An oxygen providing nozzle 13 is disposed between the shield 9 and the shutter 10 for introducing a gas such as oxygen into the portion to be vapor deposited. A pump 8 is disposed to maintain a predetermined level of pressure in the vacuum chamber. The vapor deposition apparatus 1 is equipped with a pair of light emitting and receiving device 11 for measuring light transmittance of the non-magnetic substrate 2 before the ferromagnetic metal thin film is formed, and a pair of light emitting and receiving device 12 for measuring light transmittance of the non-magnetic substrate 2 on which the ferromagnetic metal thin film is formed. A thickness of the ferromagnetic metal thin film formed on the non-magnetic substrate 2 can be measured using these devices.

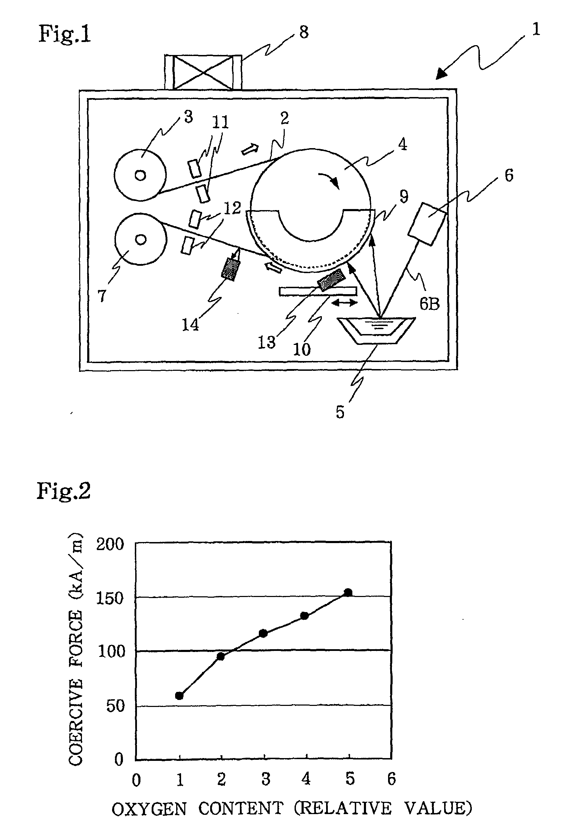

With the vapor deposition apparatus, the thickness of the magnetic layer and the control of coercive force significantly affect recording and reading properties of the magnetic tape. Conventionally, the thickness of the magnetic layer is controlled by adjusting a scanning speed of the electron beam 6B in a width direction so that the thickness of the magnetic layer in a width direction become uniform. The coercive force increases nearly in proportional to an oxygen amount that is introduced when the film is formed, as shown in Fig. 2. The amount of the oxygen is controlled to have the desired coercive force.

The thickness of the magnetic film is monitored as follows: the above-mentioned light emitting and receiving devices 11, 12 are used in an in-line mode for measuring the light transmittances of the non-magnetic substrate 2 before and after the ferromagnetic metal thin film is formed, and a difference between the light transmittances is calculated, and multiplied by a correction factor to provide the thickness of the magnetic layer. For example, Japanese Patent Laid-Open Publication No.Hei 6-150309 proposes that a transmit type thickness meter is disposed in a vapor deposition apparatus in order to measure a thickness of a metal thin film magnetic layer in an in-line mode when the film is formed, and to control unevenness of the thickness. According to the art disclosed in the Publication, the transmit type thickness meter is used to measure the thickness of the metal thin film magnetic layer before and after the film formation, whereby it can be possible to control unevenness of the thickness upon the film formation by virtue of a change in a shape by erosion in sputtering.

In the conventional method for monitoring the thickness of the magnetic film, light transmittance is used such that only an average value of the thickness can be measured. Coercive force of the magnetic film, which is another key factor of the magnetic tape, cannot be monitored in-line. In other words, in the conventional monitoring method, only the thickness of the metal thin film magnetic layer as a whole can be controlled, but the coercive force of a surface of the metal thin film magnetic layer cannot be detected. It is therefore difficult to stabilize quality of the metal magnetic thin film in production. Conventionally, a sample piece from the magnetic tape after the film is formed and taken out from the vacuum chamber, and the coercive force of the sample piece is measured using a sample vibrating type magnetometer (VSM).

Accordingly, it is an object of the present invention to solve the above-mentioned problems, and to provide a method of producing a magnetic recording medium, and an apparatus thereof in which the coercive force can be detected in an in-line mode, a metal thin film magnetic layer is produced stably, and a vapor deposition film having a stable quality can be obtained.

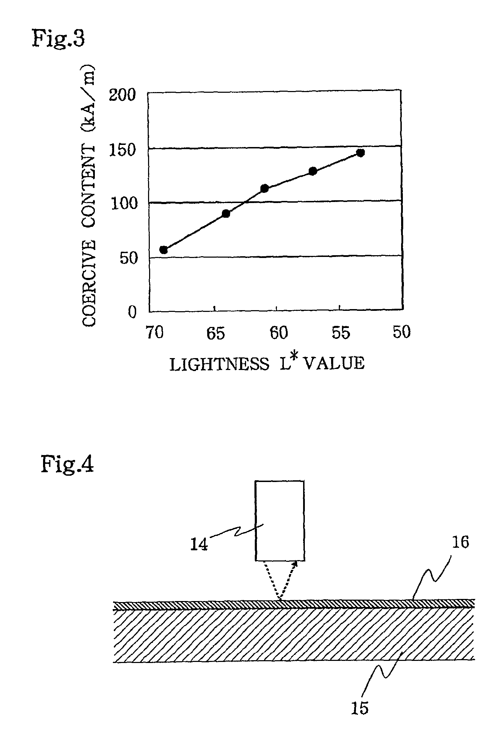

Through intense studies by the present inventor for solving the above-described problems, it is found that lightness of reflected light when light is introduced on a surface of the metal magnetic layer is in proportion to the coercive force as shown in Fig. 3, and that desired lightness can be obtained by changing an oxygen amount provided thereto. Thus, the present invention is achieved.

One aspect of the present invention is a method of producing a magnetic recording medium, comprising the steps of forming a metal thin film magnetic layer on a substrate, irradiating a light to a surface of the metal thin film magnetic layer, and measuring lightness of a reflected light from the surface to monitor the coercive force of the metal thin film magnetic layer.

Another aspect of the present invention is an apparatus for producing a magnetic recording medium, comprising: a vacuum chamber, a cooling rotating drum disposed in the vacuum chamber for transporting a non-magnetic substrate, a crucible disposed in the vacuum chamber and containing a magnetic metal material, an electron gun for irradiating a surface of the magnetic metal material to subject an oblique vapor deposition on the non-magnetic substrate, a take-up roll for taking up the non-magnetic substrate on which a metal thin magnetic film is formed, and a spectrophotometric colorimeter irradiating a light on a surface of the metal thin magnetic film moved between the cooling rotating drum and the take-up roll to measure lightness of a reflected light therefrom.

According to the present invention, the coercive force of the metal thin film magnetic layer can be controlled in-line. This is extremely effective for stabilizing the quality of the magnetic tape. Especially, electromagnetic conversion properties that depend significantly on surface oxidized conditions, and still durability uniformity can be improved. A plurality of spectrophotometric colorimeters may be disposed in the width direction as required to measure the lightness, and may be configured to feed back such that the oxygen content at each position is changed. Thus, the vapor deposited layer having the uniform coercive force in the width direction can be obtained. Generally, when the degree of the oxidation is high, the lightness of the surface of the magnetic layer decreases. When the degree of the oxidation is low, the lightness increases.

The term "lightness" herein means a color definition, and is a parameter of the degree of brightness. The lightness can be numerically determined by a color system. The colors of a substance and a light source can be expressed by a numerical value and a symbol. There are 1) L*a*b* color system, 2) Munsell color system, 3) L*C*h* color system and the like. Those are established by International Commission on Illumination (CIE). Any color systems can be used in the present invention with non-limiting sense.

The invention will be described by reference to its preferred embodiment. In this detailed description, reference will be made to the various figures where certain features are identified by reference numerals and wherein like numerals indicate like features.

Fig. 1 is a schematic diagram of a vapor deposition apparatus according to an embodiment of the present invention;
Fig. 2 is a graph showing a relation between an oxygen content (relative value) and coercive force Hc;
Fig. 3 is a graph showing a relation between a lightness L* value and coercive force Hc;
Fig. 4 is a schematic diagram of a lightness measurement using an in-line type spectrophotometric colorimeter; and
Fig. 5 is a schematic diagram of a conventional vapor deposition apparatus.

The magnetic recording medium produced by the present invention includes the magnetic layer containing the ferromagnetic metal thin film formed by the oblique vapor deposition method on the non-magnetic substrate.

As described above, in the conventional vapor deposition apparatus 1 as shown in Fig. 5, the light emitting and receiving devices 11, 12 are disposed as thickness meters to control a thickness of the whole magnetic layer before and after the metal thin film magnetic film is formed. However, the coercive force of the magnetic film cannot be controlled in-line.

According to the present invention, as shown in Fig. 1, the vapor deposition apparatus 1 is equipped with a spectrophotometric colorimeter 14 for measuring the lightness of the surface of the magnetic film formed. With the lightness, the coercive force can be controlled. Specifically, a relation between an oxygen content and the coercive force, and a relation between the coercive force and the lightness are determined in advance so that the coercive force can be controlled in-line. The vapor deposition apparatus 1 shown in Fig. 1 is similar to the conventional one shown in Fig. 5 except that the spectrophotometric colorimeter 14 for measuring the lightness is added. Therefore, in the present invention, the conventional vapor deposition apparatus 1 can be used.

Fig. 4 shows a preferred example of the spectrophotometric colorimeter 14. The surface of the metal thin film magnetic layer 16 vapor deposited on the tape 15 is irradiated obliquely through an optical fiber (not shown) from a light source such as a halogen light, and reflects the light. The reflected light is amplified, and is measured for the lightness with the spectrophotometric colorimeter 14. The spectrophotometric colorimeter 14 is disposed outside of the vapor deposition mechanism, and the lightness is monitored outside. Any types of the spectrophotometric colorimeters can be used as long as the lightness can be measured.

The system for measuring the lightness is especially preferable for the oblique vapor deposition of the ferromagnetic metal thin film in the production apparatus of the magnetic recording medium. As described above, the oblique vapor deposition apparatus 1 schematically shown in Fig. 1 is the same as the conventional one shown in Fig. 5 except that the system for measuring the lightness is added. A material of the crucible 5 is not especially limited, and may be selected so that the material is not reacted with the ferromagnetic metal dissolved in the crucible. Preferred examples of the crucible material include magnesium oxide, zirconia, calcium oxide and the like.

A material of the non-magnetic substrate 2 for use in the present invention is not especially limited. The non-magnetic substrate 2 can be made of various types of film that withstand the heat generated when the ferromagnetic metal thin film is vapor deposited. Use may be made of polyethylene terephthalate, polyethylene naphthalate, polyamide, polyamideimide, polyimide, and the like.

The composition of the ferromagnetic metal is also not especially limited. Most preferably, the ferromagnetic metal comprises Co. The ferromagnetic metal may comprise a Co based alloy containing Co as a main component at 60 atomic % or more, preferably 80 atomic % or more, and more preferably 90 atomic % or more. The Co based alloy preferably comprises Co and Ni, or Co, Ni and Cr as main components. A content of each element other than Co may be suitably selected depending on magnetic properties and corrosion resistance as required.

The vapor deposition film comprising such ferromagnetic metal comprises columnar crystal particles inclined to the non-magnetic substrate 2. Incident angles of the ferromagnetic metal introduced to the surface of the non-magnetic substrate 2 vary continuously from the maximum incident angle $\theta max$ at an initial stage of vapor deposition to the minimum incident angle $\theta min$ at an end stage of vapor deposition. As a result, columnar crystal particles propagate in an arcuate structure on the surface of the substrate. The $\theta max$ and $\theta min$ can be selected depending on the intended magnetic properties as required. It is generally preferable that the $\theta max$ be in the range of about 80 to 90 degree, and that $\theta min$ be in the range of about 10 to 60 degree.

An oxygen content that is introduced into the chamber upon the oblique vapor deposition may be changed in-line as required based on the coercive force controlled by the lightness measurement system according to the present invention.

As described above, according to the present invention, the lightness is measured using an in-line mode spectrophotometric colorimeter, the spectrophotometric colorimeter is configured to feed back such that an oxygen content is changed based on the lightness measured to provide uniform lightness. As a result, a vapor deposited film with uniform coercive force can be obtained effectively and stably.

Example

A more detailed description of the present invention including particular embodiments is described hereinafter.

Using the oblique vapor deposition apparatus 1 as schematically shown in Fig. 1, a ferromagnetic metal thin film was formed on a non-magnetic substrate 2 comprising a polyethylene terephthalate (PET) film having a thickness of 7 $\mu m$. An average minimum incident angle $\theta min$ was 50 degree, an average distance between a surface of a dissolved ferromagnetic metal contained in a crucible 5 and a drum 4 was about 300 mm, and an opening width of a shield 9 was 500 mm.

A vacuum chamber was evacuated with an evacuator 8 to hold a pressure to $10^{-3}$ Pa. Under the condition, the non-magnetic substrate 2 was moved at a rate of 50 m/min. The ferromagnetic metal, or Co metal, contained in the crucible 5 was irradiated with an electron beam 6B from an electron gun 6, and dissolved for vapor deposition. The electron beam 6B from the electron gun 6 struck to the surface of the ferromagnetic metal in the crucible 5 and sanned in a longitudinal direction of the crucible 5. An oxygen supply nozzle 13 supplied an oxygen containing gas as a main component as required, when the Co metal was vapor deposited. An intended thickness of the vapor deposited layer was 1800 angstrom. The crucible 5 was made of magnesium oxide.

As an in-line type spectrophotometric colorimeter 14 for emitting light and measuring lightness of reflected light, a line reflectance monitor "MCPD-2000" manufactured by Otsuka Denshi Co. Ltd. was used. The spectrophotometric colorimeter 14 is in a generalized separate mode. That is, the reflected light from an object to be measured is led into the spectrophotometric colorimeter with optical fiber, is detected by a photodiode array (PDA), and is converted to various data in a data processor. The lightness was measured in the L*a*b* color system, as a value of L*. The L* is an absolute number.

Five level samples made with varying oxygen supplies were measured for coercive force Hc using the VSM. A relation between the oxygen content (relative value) and the coercive force Hc was determined. The results are shown in Fig. 2 as a graph. The following approximation equation (1) was obtained from the graph.

$$\text{Coercive force} = 22.134 \text{ x oxygen content} + 43.551 \qquad (1)$$

New five level samples with varying oxygen supplies were made, cut into suitable sizes, and measured for the lightness L* values using the spectrophotometric colorimeter, and for the coercive force Hc using the VSM. A relation between the lightness L* value and the coercive force Hc was determined. The results are shown in Fig. 3 as a graph. There was correlation between the lightness L* value and the coercive force Hc. The following approximation equation (2) was obtained from the graph.

$$\text{Coercive force} = -5.5145 \text{ x L* value} + 439.87 \qquad (2)$$

Thus, the correlation between the lightness L* value and the coercive force Hc was obtained in an off-line mode. It was experimentally confirmed that the correlation was also obtained in the in-line mode.

Four levels of the intended coercive force (target coercive force) and the corresponding oxygen contents (needed oxygen content relative values) were calculated using the approximation equation (1). The lightness L* value (target lightness L* value) was calculated using the approximation equation (2). Four levels of samples were produced in-line such that the needed oxygen content relative value in each level was set as an initial value, and oxygen contents were adjusted while measuring the lightness L* value to have the target lightness L* value. Thus-obtained samples were measured for the coercive force. Differences between the measured values and the target values in the coercive force were represented by percentage (%). The results are also shown in Table 1.

Table 1

| Target lightness L* value | Needed oxygen content relative value (initial setting value) | Target coercive force (kA/m) | Measured coercive force (kA/m) | Difference (%) |
|---|---|---|---|---|
| 64 | 1.96 | 86.9 | 87.5 | +0.69 |
| 60 | 2.96 | 109.0 | 111.2 | +1.98 |
| 56 | 3.96 | 131.1 | 131.0 | -0.08 |
| 52 | 4.95 | 153.1 | 152.4 | -0.46 |

When the target lightness L* value was 70, the coercive force was less than 80 kA/m, and a difference between the target and the measured values of the coercive force was about 9%. The coercive force is generally needed to be 80 kA/m or more. Therefore, the lightness L* value of 70 is not practical. When the lightness L* values were 64, 60, 56, and 52, the differences between the target and the measured values of the coercive force were within ±2%. It can be concluded that the lightness L* value is used as a substitution of the coercive force with satisfactory reliability, and is utilized as an in-line monitor.

**Claims**

1. A method of producing a magnetic recording medium, comprising the steps of:

    forming a metal thin film magnetic layer on a substrate,
    irradiating a light to a surface of the metal thin film magnetic layer,
    and measuring lightness of a reflected light from the surface to monitor coercive force of the metal thin film magnetic layer.

2. A method according to Claim 1, wherein the coercive force is controlled by changing an oxygen content provided upon the film formation based on the monitoring.

3. A method according to Claim 1 or 2, wherein the monitoring step is conducted in an in-line mode.

4. An apparatus for producing a magnetic recording medium, comprising:

a vacuum chamber,
a cooling rotating drum disposed in the vacuum chamber for transporting a non-magnetic substrate,
a crucible disposed in the vacuum chamber and containing a magnetic metal material,
an electron gun for irradiating to a surface of the magnetic metal material to subject an oblique vapor deposition of a magnetic metal material on the non-magnetic substrate,
a take-up roll for taking up the non-magnetic substrate on which the metal thin magnetic film is formed, and
a spectrophotometric colorimeter irradiating a light on a surface of the metal thin magnetic film moved between the cooling rotating drum and the take-up roll to measure lightness of a reflected light therefrom.

Fig.1

Fig.2

Fig.3

Fig.4

Fig.5

PRIOR ART

**European Patent Office**

## EUROPEAN SEARCH REPORT

Application Number

EP 02 25 3976

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 63 222328 A (FUJI) 16 September 1988 (1988-09-16) * page 2, right-hand column, line 22 – page 3, right-hand column, line 17 * * page 4, right-hand column, line 18 – line 20 * * page 4, left-hand column, line 21 – line 26 * * page 4, right-hand column, line 26 – line 30; claims 1,2; figures 1-4 * | 1-4 | G11B5/85 G11B5/84 |
| X | JP 63 220424 A (FUJI) 13 September 1988 (1988-09-13) * page 1, right-hand column, line 13 – line 19 * * page 2, left-hand column, line 25 – line 40 * * page 2, right-hand column, line 21 – line 37 * * page 3, right-hand column, line 33 * * page 4, left-hand column, line 1 – line 4; claims 1,2; figures 1-4 * | 1-4 | |

**TECHNICAL FIELDS SEARCHED (Int.Cl.7)**

G11B

The present search report has been drawn up for all claims

| Place of search | Date of completion of the search | Examiner |
|---|---|---|
| THE HAGUE | 10 September 2002 | Magrizos, S |

EPO FORM 1503 03.82 (P04C01)

**ANNEX TO THE EUROPEAN SEARCH REPORT
ON EUROPEAN PATENT APPLICATION NO.**

EP 02 25 3976

This annex lists the patent family members relating to the patent documents cited in the above–mentioned European search report.
The members are as contained in the European Patent Office EDP file on
The European Patent Office is in no way liable for these particulars which are merely given for the purpose of information.

10-09-2002

| Patent document cited in search report | Publication date | Patent family member(s) | Publication date |
|---|---|---|---|
| JP 63222328 A | 16-09-1988 | NONE | |
| JP 63220424 A | 13-09-1988 | NONE | |

EPO FORM P0459